# EUROPÄISCHE PATENTSCHRIFT

(11) **EP 1 212 205 B1**
(45) Veröffentlichungstag und Bekanntmachung des Hinweises auf die Patenterteilung: **22.10.2003**
(21) Anmeldenummer: 00965985.5
(22) Anmeldetag: 13.09.2000
(51) Int. Cl.: B60G 17/052, B60G 17/015

(54) **STEUERANLAGE ZUM HEBEN UND SENKEN DES FAHRZEUGAUFBAUS VON LUFTGEFEDERTEN FAHRZEUGEN MIT NIVEAUREGELUNG**
CONTROLLING INSTALLATION FOR LIFTING AND LOWERING THE VEHICLE BODY OF AIR-SUSPENDED MOTOR VEHICLES WITH LEVEL CONTROL
SYSTEME DE COMMANDE PERMETTANT DE LEVER ET DE BAISSER LA CARROSSERIE DE VEHICULES A SUSPENSION PNEUMATIQUE AVEC REGULATION DE NIVEAU

(30) Priorität: 18.09.1999 DE 19944873
(43) Veröffentlichungstag der Anmeldung: 12.06.2002
(73) Patentinhaber: Haldex Brake Products GmbH, 69123 Heidelberg (DE)
(72) Erfinder: SULZYC, Georg, 69214 Eppelheim (DE); BLANZ, Roland, 69253 Heiligkreuzsteinach (DE)
(74) Vertreter: Patentanwälte Rehberg + Hüppe
(86) Internationale Anmeldenummer: EP0008920
(87) Internationale Veröffentlichungsnummer: WO01021422

(56) Entgegenhaltungen:
- EP-A- 0 398 008
- EP-A- 0 487 928
- EP-A- 0 520 147
- DE-C- 3 344 022
- FR-A- 2 709 095
- PATENT ABSTRACTS OF JAPAN vol. 1998, no. 11, 30. September 1998 (1998-09-30) & JP 10 166830 A (HINO MOTORS LTD), 23. Juni 1998 (1998-06-23)

## Beschreibung

Die Erfindung betrifft eine Steueranlage zum Heben und Senken des Fahrzeugaufbaus von luftgefederten Fahrzeugen mit Niveauregelung, mit einer Druckluftquelle, mindestens einem Niveauregelventil, mindestens einer Fahrzeugachse zugeordneten Luftfederbälgen, die zur Einregelung eines Sollabstandes zwischen Fahrzeugaufbau und Fahrzeugachse durch das zugeordnete Niveauregelventil mit der Druckluftquelle oder einem drucklosen Auslaß verbindbar sind, einem den Abstand zwischen Fahrzeugaufbau und Fahrzeugachse erfassenden und ein entsprechendes elektrisches Signal abgebenden Wegsensor, einer Schaltventilanordnung mit den Stellungen Heben, Senken, Fahrt und Stop, und einer elektronischen Steuereinrichtung zur Steuerung der Schaltventilanordnung entsprechend dem von dem Wegsensor abgegebenen elektrischen Signal. Unter einer solchen Steueranlage zum Heben und Senken des Fahrzeugaufbaus von luftgefederten Fahrzeugen wird eine Anlage verstanden, bei der der Sollabstand zwischen Fahrzeugaufbau und Fahrzeugachse automatisch eingestellt wird. Es ist aber auch möglich und sinnvoll, die Steueranlage so zu erweitern, daß zusätzlich willkürlich der Fahrzeugaufbau gehoben oder gesenkt werden kann, um z. B. eine vorgegebene Rampenhöhe anzusteuern und einen Be- oder Entladevorgang durchzuführen. Die Steueranlage kann auch so ausgebildet sein, daß unterschiedliche Fahrgestellhöhen abgespeichert oder abspeicherbar sind, die dann je nach Bedarf abgerufen werden können. Die Steueranlage läßt sich auf Motorfahrzeugen wie auch auf Anhängern anwenden und einsetzen.

Eine Steueranlage der eingangs beschriebenen Art ist aus der DE 35 06 179 C2 bekannt. Wesentlicher Bestandteil dieser Steueranlage ist ein Niveauregelventil, welches bei intakter Steueranlage den Sollabstand zwischen Fahrzeugaufbau und Fahrzeugachse einregelt. Das Niveauregelventil ist bereits mit einem Wegsensor baulich vereinigt, der entsprechend dem Abstand zwischen Fahrzeugaufbau und Fahrzeugachse ein elektrisches Signal an eine elektronische Steuereinrichtung abgibt. Der elektronischen Steuereinrichtung ist eine Schaltventilanordnung nachgeschaltet, die aus einem Schaltventil mit vier Stellungen Heben, Senken, Fahrt und Stop besteht. Das Schaltventil ist zweikreisig ausgebildet, d. h. es werden damit zwei Luftfederbälge oder Luftfederbalgkreise bedient. Die elektronische Steuereinrichtung ist auch mit einem Wahlschalter verbunden, so daß ein willkürliches Heben und Senken des Fahrzeugaufbaus, beispielsweise zur Anpassung an eine vorgegebene Rampenhöhe, bei elektrischer Versorgung der Steueranlage möglich ist. Bei an einer Rampe abgestellten Anhängern ist in der Regel die elektrische Versorgung unterbrochen, so daß dann ein willkürliches Heben und Senken nicht mehr möglich ist. Bei einer Unterbrechung der Spannungsversorgung, gleichgültig, ob in einem Defektfall auftretend oder bewußt herbeigeführt, verbleibt es bei der zuvor eingenommenen Stellung des Schaltventils. Der Fahrzeugaufbau kann dann weder gehoben noch abgesenkt werden. Das Rampenproblem wird nur dann gelöst, wenn die elektrische Versorgung der Steueranlage sichergestellt ist.

Aus der DE 43 27 764 A1 ist eine Steueranlage zum Heben und Senken des Fahrzeugaufbaus von luftgefederten Fahrzeugen mit Niveauregelung bekannt, wobei das Fahrzeug zusätzlich mit einer liftbaren Achse versehen ist. Die Steueranlage weist eine elektronische Steuereinrichtung mit einer Schaltventilanordnung auf, die mehrere Schaltventile besitzt, die einerseits elektrisch und andererseits durch eine Feder ansteuerbar sind. Dabei ist die Anordnung so getroffen, daß die elektrisch eingestellte Stellung der Schaltventile auch ohne Strom beibehalten wird. Dadurch bleibt die Liftachse in ihrer jeweils erreichten Stellung, auch wenn der Strom abgeschaltet wird oder ausfällt. Dadurch wird zwar Strom gespart. Bei Ausfall der Spannungsversorgung ist ein Heben oder Senken des Fahrzeugaufbaus nicht mehr möglich.

Der Erfindung liegt die Aufgabe zugrunde, eine Steueranlage der eingangs beschriebenen Art zu schaffen, die insbesondere auf Anhängern anwendbar ist und bei der unabhängig von einer Spannungsversorgung eine automatische Betriebsbereitschaft gegeben ist.

Erfindungsgemäß wird dies bei einer Steueranlage der eingangs beschriebenen Art dadurch erreicht, daß zwischen der Druckluftquelle und den Luftfederbälgen zwei parallele Leitungszweige vorgesehen sind, daß das Niveauregelventil in einem der beiden Leitungszweige angeordnet ist und daß in einem oder in beiden parallelen Leitungszweigen je ein Sperrventil angeordnet ist, das einerseits elektrisch und andererseits über eine Feder in zwei Stellungen schaltbar ist, wobei in der durch die Feder eingeschalteten Stellung der das Niveauregelventil aufweisende Leitungszweig und in der elektrisch eingeschalteten Stellung der andere Leitungszweig freigeschaltet wird.

Die Erfindung geht von dem Gedanken aus, die Steueranlage zum Heben und Senken des Fahrzeugaufbaus von luftgefederten Fahrzeugen mit Niveauregelung in der Regel elektrisch über eine elektronische Steuereinrichtung zu betreiben, jedenfalls dann, wenn eine ordnungsgemäße Spannungsversorgung sichergestellt ist. Darüber hinaus wird aber auch eine Rückfallebene verwirklicht, die sich dann automatisch einstellt, wenn im Defektfalle oder willkürlich herbeigeführt die Spannungsversorgung unterbrochen wird. Dies kann beispielsweise beim Abstellen eines Anhängers an einer Laderampe der Fall sein. Trotz der Unterbrechung der elektrischen Versorgung des Anhängers ist die Steueranlage auf mechanisch-pneumatischem Wege voll funktionsfähig. Es können willkürlich Hebe- und Senkvorgänge durchgeführt werden. Damit ist es möglich, den Fahrzeugaufbau bei Be- oder Entladung der Rampenhöhe kontinuierlich anzupassen. Zur Erreichung dieser Rückfallebene ist es wichtig, daß zwischen der Druckluftquelle einerseits und den Luftfederbälgen andererseits zwei parallele Leitungszweige vorgesehen sind, die durchaus eine unterschiedliche Erstreckung aufweisen können. Die beiden Leitungszweige können gleichsam von der Druckluftquelle bis zu den Luftfederbälgen durchgängig vorgesehen sein oder aber sich nur über einen Teil dieses Weges erstrecken. Grundsätzlich ist das Niveauregelventil in nur einem der beiden Leitungszweige angeordnet, während der andere Leitungszweig von einem Niveauregelventil freigehalten ist. Es genügt bereits, wenn in einem der beiden parallelen Leitungszweige ein Sperrventil vorgesehen ist. Es ist aber auch möglich, in beiden parallelen Leitungszweigen je ein Sperrventil anzuordnen. Die beiden Sperrventile können dann unter baulicher Vereinfachung auch wiederum an der Verzweigungsstelle der beiden Leitungszweige angeordnet werden. Dabei ist sowohl die Anordnung an der der Druckluftquelle zugekehrten Verzweigungsstelle wie auch an der Verzweigungsstelle zu den Luftfederbälgen möglich.

Wichtig ist in allen Fällen, daß das oder die Sperrventile einerseits elektrisch in eine erste Stellung und andererseits mechanisch in eine zweite Stellung schaltbar sind, so daß die erste Stellung nur bei ordnungsgemäßer Spannungsversorgung eingenommen wird, während bei einer Spannungsunterbrechung automatisch die mechanisch-pneumatische Arbeitsweise eingeschaltet wird, also die Rückfallebene. Je nach dem, ob die Steueranlage elektrisch oder mechanisch-pneumatisch arbeitet, wird der jeweils andere Leitungszweig wirkungsmäßig stillgesetzt oder in seinen Auswirkungen doch so reduziert, daß er keinen Einfluß auf die Druckluft in den Luftfederbälgen hat. Das Sperrventil weist mindestens zwei Stellungen auf, von denen die eine Stellung eine Sperrstellung ist, bei der die angeschlossenen Leitungsteile gegeneinander abgesperrt sind. Die andere Stellung ist eine Durchgangs- oder Freigabestellung, in der die jeweils angeschlossenen Leitungsteile miteinander verbunden sind.

Eine erste Realisierungsmöglichkeit besteht darin, daß das Sperrventil in dem Leitungszweig vor oder nach dem Niveauregelventil angeordnet ist und eine durch die Feder einstellbare Durchgangsstellung sowie eine elektrisch einstellbare Sperrstellung aufweist. Besonders vorteilhaft ist es, wenn das Sperrventil nach dem Niveauregelventil angeordnet ist, so daß die Schaltventilanordnung in dem anderen Leitungszweig untergebracht werden kann. Der Leitungszweig, in welchem das Niveauregelventil angeordnet ist und der sich hier bis zu den Luftfederbälgen erstrecken kann, wird bei ordnungsgemäßer Spannungsversorgung durch das Sperrventil abgesperrt, so daß die Schaltungsanordnung die Luftfederbälge ohne Luftverlust ordnungsgemäß bedienen kann. Es ist aber auch möglich, das Sperrventil in dem das Niveauregelventil enthaltenden Leitungszweig vor dem Niveauregelventil anzuordnen. Ein geringfügiger Druckluftverbrauch an dem Niveauregelventil infolge von einwirkenden Stößen und Schwingungen während des Fahrbetriebes des Fahrzeuges kann in Kauf genommen werden.

Eine andere Möglichkeit besteht darin, daß das Sperrventil in dem das Niveauregelventil nicht-aufweisenden Leitungszweig angeordnet ist und eine durch die Feder einstellbare Sperrstellung sowie eine elektrisch einstellbare Durchgangsstellung aufweist. Wenn das Sperrventil in dem das Niveauregelventil nicht-aufweisenden Leitungszweig angeordnet ist, muß es gleichsam umgekehrt gestaltet sein bzw. seine Stellungen müssen umgekehrt ansteuerbar ausgebildet sein. Der elektrischen Ansteuerung ist die Durchgangsstellung zugeordnet, so daß bei ordnungsgemäßer Spannungsversorgung das Niveauregelventil umgangen wird. Bei Spannungsausfall oder Spannungsunterbrechung hingegen wird die Umgehungsleitung des Niveauregelventils abgesperrt, so daß nunmehr seinerseits das Niveauregelventil automatisch seine mechanisch-pneumatische Funktion erfüllt.

Es ist aber auch möglich, daß in beiden Leitungszweigen je ein Sperrventil angeordnet ist, die beide je eine Sperrstellung und eine Durchgangsstellung aufweisen, wobei die Durchgangsstellung des Sperrventils in dem das Niveauregelventil aufweisenden Leitungszweig durch die Feder und die Durchgangsstellung des anderen Sperrventils elektrisch über die elektronische Steuereinrichtung einstellbar ist. Die doppelte Anordnung je eines Sperrventils in jedem der beiden Leitungszweige bedeutet zwar einen gewissen Aufwand, ist aber zur Herbeiführung der erwünschten Funktion mit Rückfallebene durchaus möglich. Außerdem wird dadurch vorteilhaft sichergestellt, daß bei ordnungsgemäßer Spannungsversorgung das Niveauregelventil keinen Luftverbrauch herbeiführen kann. Dabei ist es dann immer noch möglich, die beiden Leitungszweige mehr oder weniger lang zu gestalten. Die beiden Leitungszweige beginnen in der Regel unmittelbar nach der Druckluftquelle, also im Anschluß an einen Druckluftvorratsbehälter o. dgl.. Die den Luftfederbälgen zugeordnete Verzweigungsstelle kann unterschiedlich weit von den Luftfederbälgen vorgesehen sein. Es ist auch möglich, an dieser Verzweigungsstelle ein Zweiwegeventil einzuschalten, um an dieser Stelle Rückströmungen zu vermeiden.

Weiterhin ist es möglich, daß an der von der Druckluftquelle ausgehenden Verzweigungsstelle der beiden Leitungszweige ein gemeinsames Sperrventil vorgesehen ist, welches in der durch die Feder einschaltbaren Stellung die Druckluftquelle mit dem das Niveauregelventil enthaltenden Leitungszweig verbindet und den anderen Leitungszweig absperrt, während es in der durch die elektrische Steuereinrichtung einschaltbaren Stellung die Druckluftquelle mit dem das Niveauregelventil nicht-enthaltenden Leitungszweig verbindet und den das Niveauregelventil enthaltenden Leitungszweig absperrt. Ein solches gemeinsames Sperrventil erfüllt gleichsam die Funktionen von je einem in beiden Leitungszweigen angeordneten Sperrventil. Es läßt sich jedoch baulich vorteilhaft gestalten, indem das gemeinsame Sperrventil nur zwei Stellungen aufweisen muß. In der einen Stellung wird der eine Leitungszweig mit Druckluft versorgt und der andere abgesperrt, während es in der anderen Stellung genau umgekehrt ist. Die Zuordnung der elektrischen Ansteuerung einerseits und der Ansteuerung über die Feder andererseits erfolgt sinngemäß. Entsprechend ist es auch möglich, daß an der den Luftfederbälgen zugekehrten Verzweigungsstelle der beiden Leitungszweige ein gemeinsames Sperrventil vorgesehen ist, welches in der durch die Feder einschaltbaren Stellung den das Niveauregelventil enthaltenden Leitungszweig mit den Luftfederbälgen verbindet und den anderen Leitungszweig absperrt, während es in der durch die elektrische Steuereinrichtung einschaltbaren Stellung den das Niveauregelventil nicht-enthaltenden Leitungszweig mit den Luftfederbälgen verbindet und den anderen Leitungszweig absperrt. Damit ist aufgezeigt, daß das gemeinsame Sperrventil auch an der anderen Verzweigungsstelle der beiden Leitungszweige, also auf der Seite der Luftfederbälge, möglich ist.

Bei all diesen aufgezeigten Realisierungsmöglichkeiten besteht die Möglichkeit, daß die Schaltventilanordnung zwei in Reihe angeordnete Schaltventile aufweist, die beide elektrisch sowie je durch eine Feder schaltbar sind. Durch die Anordnung der beiden Schaltventile in Reihe hintereinander ergeben sich hinreichende Möglichkeiten für die verschiedenen Stellungskombinationen Heben, Senken, Fahrt und Stop. Die Schaltventilanordnung kann in dem das Niveauregelventil nicht aufweisenden Leitungszweig oder in einer nachgeschalteten gemeinsamen Leitung vorgesehen sein, die zu den Luftfederbälgen führt.

Weiterhin ist es möglich, daß die Schaltventilanordnung ein Schaltventil mit mindestens drei Stellungen Senken, Heben und Stop = Fahrt aufweist, das elektrisch sowie über eine Feder schaltbar ist. Es genügen also drei Stellungen an dem Schaltventil, wobei die Stellung Stop mit der Stellung Fahrt zusammenfällt. Dies ist vorteilhaft, so daß bei ordnungsgemäßer Spannungsversorgung und ordnungsgemäß eingenommenem Sollabstand zwischen Fahrzeugaufbau und Fahrzeugachse ein Luftverbrauch während der Fahrt vermieden wird. In allen Ausführungsfällen ist es wichtig, daß sowohl das Sperrventil wie auch die Schaltventilanordnung über je eine Feder in je eine bestimmte Stellung schaltbar ist, die der Rückfallebene, also bei unterbrochener Spannungsversorgung, entspricht.

Weiterhin ist es in diesem Zusammenhang möglich, daß das Schaltventil und das Sperrventil baulich vereinigt sind. Diese Anordnung ist besonders vorteilhaft und preisgünstig realisierbar. Es ist lediglich die Anordnung der beiden Leitungszweige erforderlich sowie eine gemeinsame Ventileinheit, die einerseits die Funktionen des Schaltventils und andererseits die Funktionen des Sperrventils erbringt. Das Niveauregelventil kann dabei den Wegsensor integriert enthalten. Andererseits ist es auch möglich, das Niveauregelventil und den Wegsensor baulich zu trennen. In allen Fällen ist das elektrische Signal, welches von dem Wegsensor abgegeben wird, über die elektronische Steuereinrichtung zu verarbeiten.

Bei allen aufgezeigten Realisierungsmöglichkeiten kann die Schaltventilanordnung in dem das Niveauregelventil nicht-enthaltenden Leitungszweig angeordnet sein. Andererseits kann die Schaltventilanordnung aber auch nach der Verzweigungs- bzw. Zusammenführungsstelle der beiden Leitungszweige vorgesehen sein, also in unmittelbarer Vorordnung vor den Luftfederbälgen.

Weiterhin besteht die Möglichkeit, daß die beiden parallelen Leitungszweige über ein Zweiwegeventil zusammengeführt sind und die Schaltventilanordnung in einer gemeinsamen, zu den Luftfederbälgen führenden Leitung angeordnet ist. Das Zweiwegeventil erfüllt seine an sich bekannte Funktion, d. h. es leitet den jeweils höheren Eingangsdruck ausgangsseitig weiter.

Besonders vorteilhaft ist es, wenn die elektronische Steuereinrichtung zur Verarbeitung eines den Fahrzustand wiedergebenden elektrischen Signals ausgebildet ist. Ein solches elektrisches Signal wird üblicherweise von einer ABS- oder EBS-Anlage bereitgestellt und kann innerhalb der elektronischen Steuereinrichtung sinnvoll verarbeitet und genutzt werden. Die elektronische Steuereinrichtung selbst kann als separate Einrichtung oder aber auch baulich vereinigt mit der elektronischen Steuereinrichtung der ABS-Anlage oder einer EBS-Anlage verwirklicht werden.

In allen Fällen ist es möglich, daß das Niveauregelventil und der Wegsensor baulich vereinigt sind. Solche bauliche Vereinigungen sind zwar im Stand der Technik bekannt. Sie werden jedoch, soweit erkennbar, bisher nicht im Zusammenhang mit einer normalen elektrischen Betätigung einerseits und einer pneumatisch-mechanischen Betätigung in einer Rückfallebene andererseits benutzt. Bei einer solchen baulichen Vereinigung kann der ohnehin vorhandene Stelltrieb des Niveauregelventils gleichzeitig als mechanisches Bauteil des Wegsensors genutzt werden.

Es besteht die Möglichkeit, daß die elektrische Steuereinrichtung mit einem Wahlschalter und/oder der das Niveauregelventil enthaltende Leitungszweig mit einem manuell betätigbaren Steuerventil zum willkürlichen Heben und Senken des Fahrzeugaufbaus versehen sind. Ein solcher Wahlschalter erfüllt die Funktion, daß bei ordnungsgemäßer Spannungsversorgung ein willkürliches Heben und Senken möglich ist. Der Wahlschalter kann auch weitere Funktionen erfüllen bzw. entsprechend ausgebildet sein, beispielsweise zum Abspeichern einer zweiten Fahrgestellhöhe o. dgl.. Entsprechend ist in dem das Niveauregelventil enthaltenden Leitungszweig ein manuell betätigbares Steuerventil eingeschaltet, mit welchem gleiche oder ähnliche Funktionen dann erreicht werden können, wenn in der Rückfallebene gearbeitet wird.

Die Erfindung wird anhand verschiedener Ausführungsformen der Steueranlage weiter beschrieben und verdeutlicht. Es zeigen:
- Fig. 1: eine erste Ausführungsform der Steueranlage in stromlosem Zustand der Einheiten, also bei ordnungsgemäßer Spannungsversorgung, jedoch ohne Auswirkung der elektronischen Steuereinrichtung,
- Fig. 2: eine zweite Ausführungsform der Steueranlage in stromlosem Zustand, wobei sich die Ventileinheiten zugleich in der Stellung befinden, in der sie auch dann sind, wenn eine Spannungsversorgung ausgefallen oder unterbrochen ist,
- Fig. 3: eine dritte Ausführungsform der Steueranlage mit Darstellung der einzelnen Elemente bei ordnungsgemäßer Spannungsversorgung der Steueranlage in der Stellung Fahrt,
- Fig. 4: eine vierte Ausführungsform der Steueranlage in stromlosem Zustand der singulären Anlagenteile,
- Fig. 5: eine weitere Ausführungsform der Steueranlage bei ordnungsgemäßer Spannungsversorgung in der Stellung Fahrt,
- Fig. 6: eine weitere Ausführungsform der Steueranlage bei ordnungsgemäßer Spannungsversorgung in der Stellung Fahrt, angepaßt an ein Fahrzeug mit Liftachse,
- Fig. 7: eine weitere Ausführungsform der Steueranlage im stromlosem Zustand bei einem Fahrzeug mit abgesenkter Liftachse, und
- Fig. 8: eine weitere Ausführungsform der Steueranlage in stromlosem Zustand.

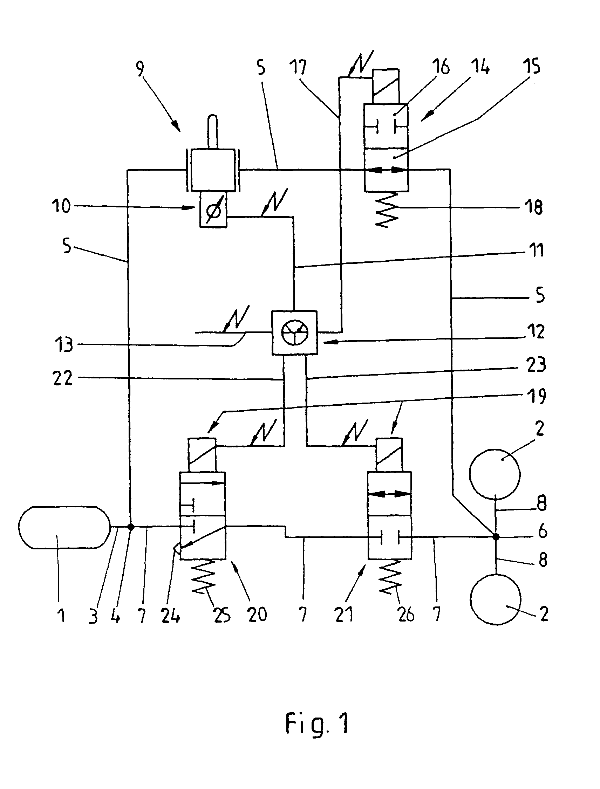

Die in Fig. 1 dargestellte Steueranlage zum Heben und Senken des Fahrzeugaufbaus von luftgefederten Fahrzeugen mit Niveauregelung weist eine Druckluftquelle 1, beispielsweise in Form eines Druckluftvorratsbehälters auf, der in üblicher Weise über eine nicht dargestellte Druckluftbeschaffungseinrichtung mit Druckluft versorgt wird. Die Steueranlage dient zum Einregeln eines Sollabstands zwischen Fahrzeugaufbau und Fahrzeugachse. Zwischen Fahrzeugaufbau und Fahrzeugachse befinden sich Luftfederbälge 2, die in der Regel in achsweiser Zuordnung zu dem jeweiligen Fahrzeug vorgesehen sind. Von der Druckluftquelle 1 führt eine Leitung 3 zu einer Verzweigungsstelle 4. Es versteht sich, daß die Verzweigungsstelle 4 auch unmittelbar an der Druckluftquelle 1 vorgesehen sein könnte. An der Verzweigungsstelle 4 beginnt ein erster Leitungszweig 5, der an einer Verzweigungsstelle 6 endet. Parallel zu dem Leitungszweig 5 ist ein Leitungszweig 7 vorgesehen, der ebenfalls an der Verzweigungsstelle 4 beginnt und an der Verzweigungsstelle 6 endet. Von der Verzweigungsstelle 6 führen Leitungen 8 zu den jeweiligen Luftfederbälgen 2. Es sind hier nur die beiden Luftfederbälge 2 einer Achse des Fahrzeuges dargestellt. Es versteht sich, daß auch eine mehrkreisige Ausbildung oder eine weitere Verzweigung zu Luftfederbälgen anderer Fahrachsen vorgesehen sein kann.

In dem Leitungszweig 5 ist ein Niveauregelventil 9 angeordnet, welches in an sich bekannter Weise ausgebildet ist. Das Niveauregelventil 9 weist einen mechanischen Stelltrieb auf, der zwischen Fahrzeugaufbau und Fahrzeugachse angelenkt ist, so daß die Höhenbewegungen des Fahrzeugaufbaus relativ zur Fahrzeugachse in bekannter Weise auf das Niveauregelventil 9 übertragen werden. Abweichend von der üblichen Ausbildung eines Niveauregelventils ist hier das Niveauregelventil 9 mit einem Wegsensor 10 versehen, also mit einem solchen Wegsensor 10 baulich vereinigt. Der Wegsensor 10 ist dazu ausgebildet und bestimmt, ein dem Weg, also dem Abstand zwischen Fahrzeugaufbau und Fahrzeugachse, entsprechendes elektrisches Signal auszubilden und über eine elektrische Leitung 11 an eine elektronische Steuereinrichtung 12 abzugeben, die wiederum zur Verarbeitung dieses Signals ausgebildet und bestimmt ist. Die elektronische Steuereinrichtung 12 wird über eine Leitung 13 mit Spannung versorgt.

In dem Leitungszweig 5 ist ein Sperrventil 14 vorgesehen bzw. eingeschaltet. Das Sperrventil 14 befindet sich bei der Ausführungsform gemäß Fig. 1 in dem Leitungszweig 5 stromab des Niveauregelventils 9. Das Sperrventil 14 weist, wie dargestellt, eine Durchgangsstellung 15 und eine Sperrstellung 16 auf. Das Sperrventil 14 könnte also auch als Durchgangsventil mit Sperrfunktion bezeichnet werden. Das Sperrventil 14 ist als Magnetventil ausgebildet und über eine elektrische Leitung 17, die von der elektronischen Steuereinrichtung 12 herangeführt ist, elektrisch ansteuerbar. Bei elektrischer Ansteuerung bzw. Erregung des Ventilmagneten nimmt das Sperrventil 14 die Sperrstellung 16 ein, so daß die an ihm angeschlossenen Leitungsstücke des Leitungszweigs 5 gegeneinander abgesperrt sind. Damit ist dann gleichsam der gesamte Leitungszweig 5 abgesperrt bzw. außer Funktion gesetzt, so daß sich irgendwelche Bewegungen des Niveauregelventils 9 nicht auf die Druckhöhe des pneumatischen Druckes in den Luftfederbälgen 12 auswirken können. Das Sperrventil 14 besitzt aber auch noch eine Feder 18, die dafür sorgt, daß das Sperrventil 14, wie dargestellt, die Durchgangsstellung 15 einnimmt, wenn die Spannungsversorgung der elektronischen Steuereinrichtung 12 über die Leitung 13 unterbrochen ist, ein sonstiger elektrischer Defekt vorliegt oder die elektronische Steuereinrichtung 12 über die Leitung 17 kein Signal aussteuert, so daß der Ventilmagnet des Sperrventils 14 nicht erregt wird. In all diesen Fällen kann sich die Kraft der Feder 18 so auswirken, daß die Durchgangsstellung 15 erreicht wird. Diese Stellung entspricht der Rückfallebene, so daß die verschiedenen Abschnitte des Leitungszweigs 5 miteinander verbunden sind und sich das Niveauregelventil 9 entsprechend auf die Luftfederbälge 2 auswirken kann.

In dem parallelen Leitungszweig 7 ist eine Schaltventilanordnung 19, hier bestehend aus zwei Schaltventilen 20 und 21, vorgesehen. Das Schaltventil 20 wird von der elektronischen Steuereinrichtung 12 über eine elektrische Leitung 22 angesteuert. Entsprechend führt eine elektrische Leitung 23 von der Steuereinrichtung 12 zu dem Schaltventil 21. Das Schaltventil 20 besitzt eine eigene Entlüftung 24 und eine Feder 25. Das Schaltventil 20 kann zwei Stellungen einnehmen. Bei nicht erregtem Ventilmagnet wirkt sich die Kraft der Feder 25 aus, so daß, wie dargestellt, der von der Verzweigungsstelle 4 ausgehende Leitungsteil des Leitungszweigs 7 abgesperrt ist, während der die beiden Schaltventile 20 und 21 verbindende Teil des Leitungszweigs 7 entlüftet ist. Das Schaltventil 20 kann elektrisch in seine andere Stellung umgesteuert werden, in welcher die Entlüftung 24 abgesperrt ist und die beiden an ihm angeschlossenen Teile des Leitungszweigs 7 miteinander verbunden sind, also Durchgang haben.

Das Schaltventil 21 der Ventilanordnung 19 besitzt keine eigene Entlüftung, jedoch ebenfalls eine Feder 26. Das Schaltventil 21 der Schaltventilanordnung 19 ist dazu ausgebildet und bestimmt, zwei Stellungen einzunehmen. In der Stellung, in der der Ventilmagnet nicht erregt wird, kann sich die Kraft der Feder 26 auswirken, so daß in dieser Stellung die beiden an ihm angeschlossenen Leitungsteile des Leitungszweigs 7 gegeneinander abgesperrt sind. Dies entspricht gleichzeitig der Stellung Stop, so daß die in den Luftfederbälgen 2 befindliche Druckluft abgesperrt und eingeschlossen ist. Wird dagegen der Ventilmagnet des auch als Magnetventil ausgebildeten Schaltventils 21 erregt, indem ein entsprechendes Steuersignal von der Steuereinrichtung 12 über die Leitung 23 zu dem Schaltventil 21 geleitet wird, dann nimmt das Schaltventil 21 seine andere dargestellte Stellung ein, in der die beiden an ihm angeschlossenen Leitungsteile des Leitungszweigs 7 miteinander verbunden sind.

Die singulären Anlagenteile der Steueranlage gemäß Fig. 1 sind in spannungs- bzw. stromlosem Zustand dargestellt, so daß sowohl das Sperrventil 14 aufgrund der Kraft der Feder 18 sowie auch die Schaltventile 20 und 21 aufgrund der Federn 25 und 26 die dargestellten Stellungen einnehmen. Der Leitungszweig 7 ist an dem Schaltventil 21 unterbrochen und die Verbindung in dem Leitungszweig 5 herbeigeführt. Damit ist der Leitungszweig 5 und insoweit die Rückfallebene freigeschaltet. Das Niveauregelventil 9 kann seine mechanisch-pneumatische Funktion in dieser Rückfallebene ausüben. Es wird durch entsprechendes Heben oder Senken des Fahrzeugaufbaus der Sollabstand zwischen Fahrzeugaufbau und Fahrzeugachse eingeregelt. Ein solcher spannungsloser Zustand kann bewußt herbeigeführt werden, wenn beispielsweise ein Anhänger an einer Rampe von einem Zugfahrzeug abgekuppelt und damit von einer elektrischen Versorgung getrennt wird.

Trotzdem können sämtliche erforderlichen Funktionen erreicht werden. Liegt andererseits eine ordnungsgemäße Spannungsversorgung vor, wie es auf einem Zugfahrzeug oder auch auf einem mit einem Zugfahrzeug gekuppelten Anhänger der Fall ist, dann schaltet die elektronische Steuereinrichtung 12 das Sperrventil 14 in die Sperrstellung 16 um, so daß der Leitungszweig 5 wirkungslos wird. Je nach den Erfordernissen werden die Schaltventile 20 und 21 durch die elektronische Steuereinrichtung 12 umgeschaltet, so daß entweder ein Heben oder Senken des Fahrzeugaufbaus eingeleitet wird oder aber auch bei ordnungsgemäßem Sollabstand zwischen Fahrzeugaufbau und Fahrzeugachse die Stopstellung oder Fahrtstellung erreicht bzw. eingestellt wird. Die jeweils erforderliche Einregulierung erfolgt hierbei ausschließlich über die Schaltventilanordnung 19, die in Form der beiden Schaltventile 20 und 21 in dem parallelen Leitungszweig 7 vorgesehen ist.

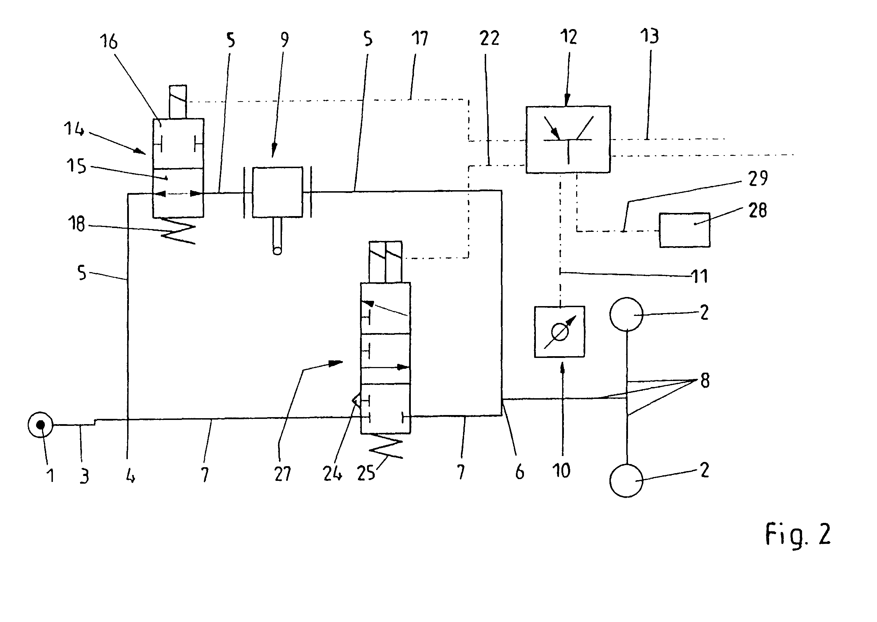

Fig. 2 zeigt eine zweite Ausführungsform der Steueranlage, wobei zunächst auf die Beschreibung der Steueranlage gemäß Fig. 1 verwiesen werden kann. Auch hier sind zwischen den Verzweigungsstellen 4 und 6 die beiden parallelen Leitungszweige 5 und 7 gebildet. Das Niveauregelventil 9 ist in dem Leitungszweig 5 angeordnet und vorgesehen. Das Sperrventil 14 ist jedoch hier stromauf des Niveauregelventils 9 angeordnet. Die Ventilanordnung 19 in dem Leitungszweig 7 besteht aus einem einzigen Schaltventil 27 mit drei Stellungen, wie dargestellt, wobei zwei der Stellungen über die elektronische Steuereinrichtung 12 und die elektrische Leitung 22 schaltbar sind, während die Feder 25 die dritte dargestellte Stellung herbeiführt. Der Wegsensor 10 ist hier losgelöst von dem Niveauregelventil 9 als separates singuläres Anlagenteil vorgesehen. Zusätzlich ist noch ein mechanisch betätigbarer Wahlschalter 28 vorgesehen, der über eine elektrische Leitung 29 mit der elektronischen Steuereinrichtung 12 verbunden ist. Der Wahlschalter 28 dient dem willkürlichen Heben und Senken bei ordnungsgemäßer Spannungsversorgung und kann darüber hinaus für weitere Funktionen, beispielsweise zum Abspeichern einer zweiten Fahrgestellhöhe o. dgl., ausgebildet sein. Ein Vergleich der Ausführungsformen der Fig. 1 und 2 läßt einerseits erkennen, daß es möglich ist, das Sperrventil 14 stromauf oder stromab des Niveauregelventils 9 in dem Leitungszweig 5 anzuordnen. Andererseits ist auch erkennbar, daß die Schaltventilanordnung 19 in verschiedener Weise ausgebildet sein kann. Sie ist jeweils in dem parallelen Leitungszweig 7 angeordnet bzw. untergebracht. Die Funktion der Steueranlage gemäß Fig. 2 ist der gemäß Fig. 1 weitgehend ähnlich.

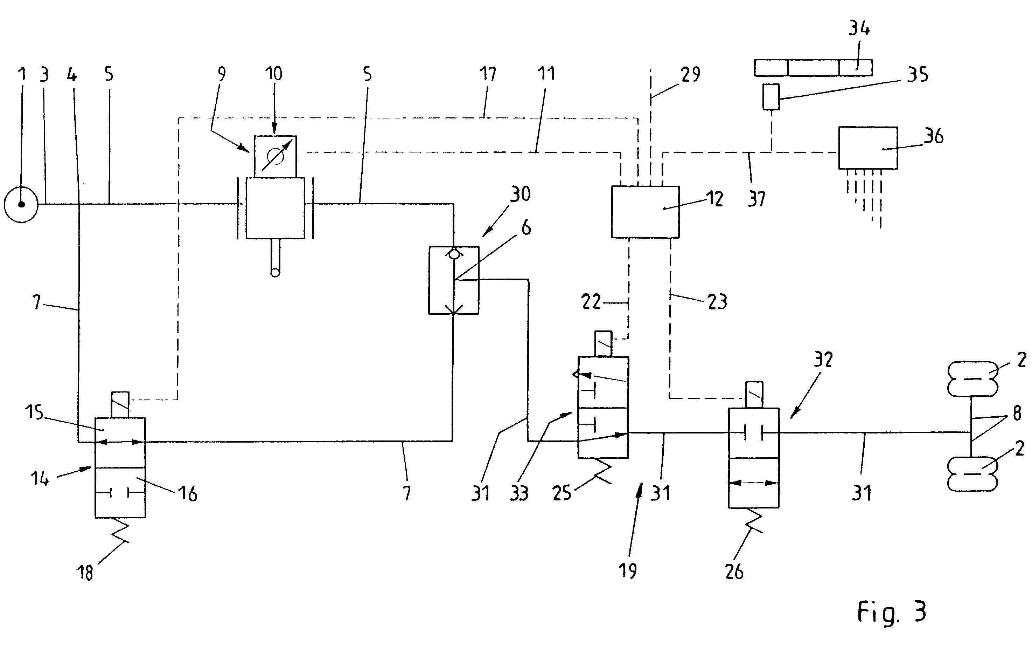

Die in Fig. 3 dargestellte Steueranlage ist in weiten Bereichen gleich oder ähnlich den bisher gezeigten Ausführungsformen aufgebaut. Abweichend davon ist das Sperrventil 14 in dem parallelen Leitungszweig 7 angeordnet. Die Verzweigungsstelle 6 ist mit einem Zweiwegeventil 30 besetzt, welches in an sich bekannter Weise ausgebildet ist. Das Zweiwegeventil 30 besitzt zwei Eingänge, die mit den Leitungszweigen 5 und 7 verbunden sind. Es ist so ausgebildet, daß der jeweils höhere Druck durchgelassen und ausgangsseitig ausgesteuert wird. An der Verzweigungsstelle 6 beginnt eine Leitung 31, die letztlich über die Leitungen 8 zu den Luftfederbälgen 2 führt. Die Schaltventilanordnung 19 ist hier nicht in dem parallelen Leitungszweig 7, sondern in der Leitung 31 angeordnet. Die Schaltventilanordnung 19 weist zwei Schaltventile 32 und 33 auf, die gegenüber den Schaltventilen 20 und 21 der Fig. 1 etwas modifiziert ausgebildet sind, jedenfalls was ihre Stellungen anbetrifft. Auf die Darstellung in Fig. 3 wird hingewiesen. Auch diese beiden Schaltventile 32 und 33 besitzen einerseits Federn 25 und 26 und sind andererseits über elektrische Leitungen 22 bzw. 23 von der elektronischen Steuereinrichtung 12 schaltbar. Das Schaltventil 32 ist als 3/2-Wegeventil ausgebildet. Das Schaltventil 33 ist als 2/2-Wegeventil ausgebildet. Weiterhin ist ein Polrad 34, ein Drehzahlfühler 35 und eine ABS/EBS-Anlage 36 vorgesehen. Der Drehzahlfühler 35 und die ABS/EBS-Anlage stehen über elektrische Leitungen 37 mit der elektronischen Steuereinrichtung 12 in Verbindung, so daß z. B. ein den Fahrzustand wiedergebendes Signal in der Steuereinrichtung 12 zur Verarbeitung gebracht werden kann. Die singulären Anlagenteile der Steueranlage sind in ihren Stellungen bei ordnungsgemäßer Spannungsversorgung und eingestellt in der Stellung Fahrt dargestellt. Die Funktion ist überschaubar.

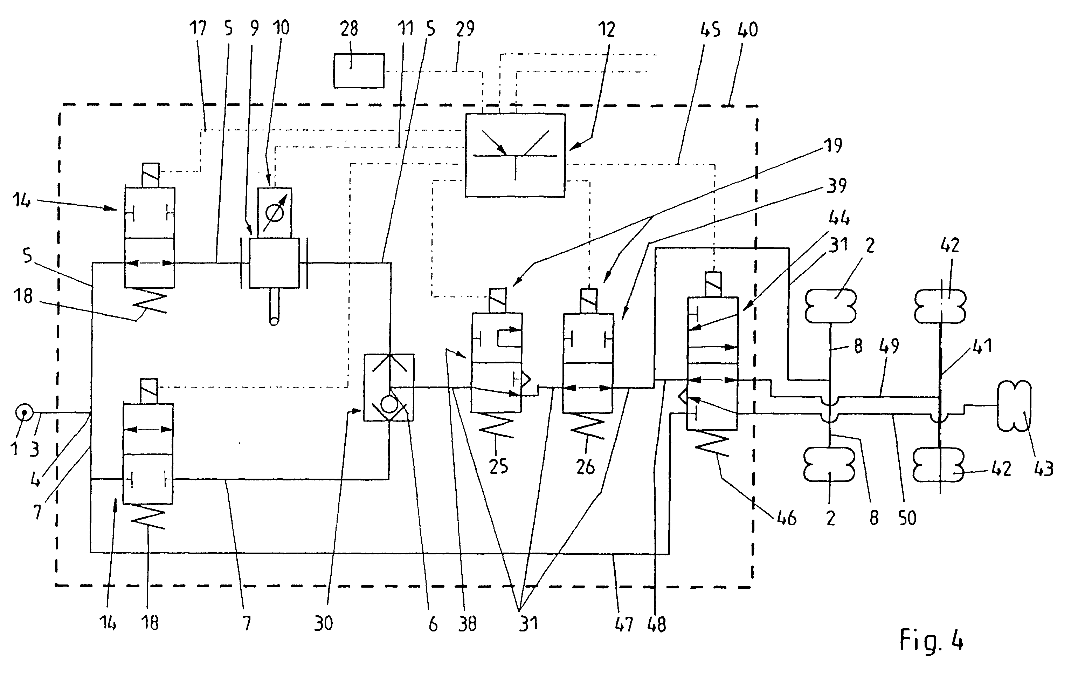

Die Ausführungsform der Steueranlage gemäß Fig. 4 schließt an die Ausführungsformen der Fig. 3 und 2 an. Sowohl in dem Leitungszweig 5 wie auch in dem Leitungszweig 7 ist je ein Sperrventil 14 mit zugehöriger Feder 18 vorgesehen. Die verschiedenen Stellungen sind umgekehrt angeordnet, wie es dem wirkungsmäßigen Zusammenhang entspricht. In der von der Verzweigungsstelle 6 ausgehenden Leitung 31 ist wiederum die Schaltventilanordnung 19 vorgesehen, die hier zwei modifiziert ausgebildete Schaltventile 38 und 39 umfaßt. Auch diese Schaltventile 38 und 39 sind einerseits über Federn 25 und 26 in die dargestellte Stellung schaltbar. Andererseits sind sie elektrisch in die jeweils andere Stellung schaltbar, und zwar über die Steuereinrichtung 12. Durch die gestrichelt angedeutete Umrahmung kann eine integrierte Baueinheit 40 gebildet werden, innerhalb der die dargestellten singulären Anlagenteile und Leitungen zusammengefaßt sein können. Die Steueranlage gemäß Fig. 4 ist in stromlosem Zustand dargestellt und für ein Fahrzeug mit Liftachse weitergebildet. Die Liftachse 41 weist Luftfederbälge 42 und einen Hebebalg 43 auf. Zur Versorgung der Luftfederbälge 42 und des Hebebalgs 43 ist ein Achsliftventil 44 vorgesehen, welches als 5/2-Wegeventil ausgebildet ist und über eine elektrische Leitung 45 über die Steuereinrichtung 12 elektrisch ansteuerbar ist. Andererseits ist auch das Achsliftventil 44 mit einer Feder 46 ausgestattet, um in stromlosem Zustand die entsprechende dargestellte Stellung einzunehmen. Das Achsliftventil 44 wird über eine Leitung 47, die von dem Leitungszweig 7 bzw. der Druckluftquelle 1 abzweigt, mit Druckluft versorgt. Eine weitere Leitung 48 stellt die Verbindung zu der Leitung 31 her. Ausgangsseitig führt eine Leitung 49 zu den Luftfederbälgen 42 und eine Leitung 50 zu dem Hebebalg 43. Auch das Achsliftventil 44 kann Bestandteil der Baueinheit 40 sein.

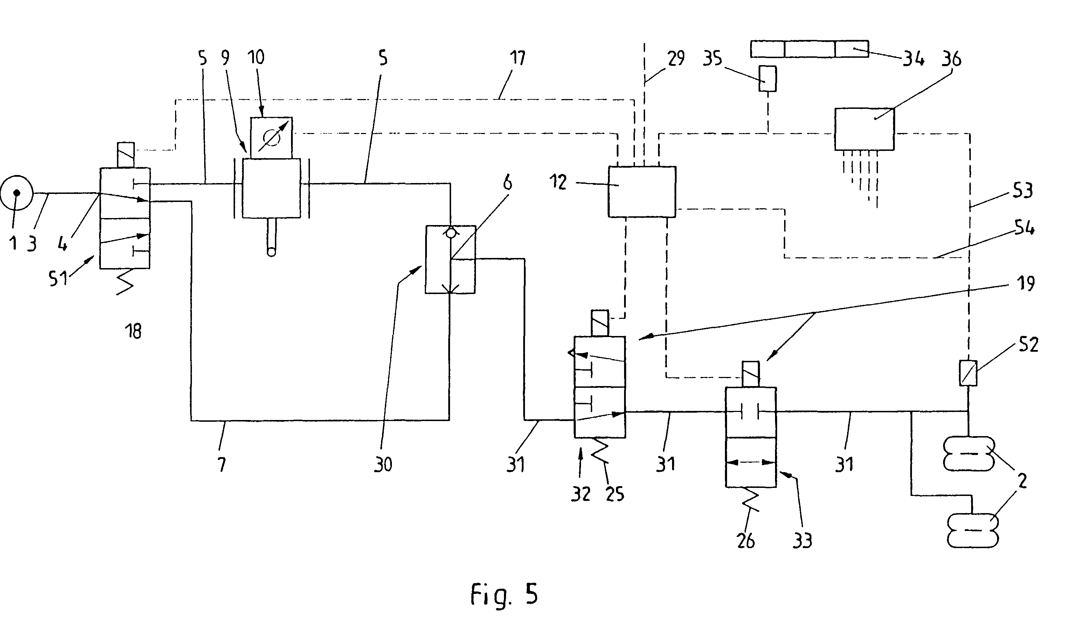

Die in Fig. 5 dargestellte Steueranlage zum Heben und Senken des Fahrzeugaufbaus von luftgefederten Fahrzeugen ist hinsichtlich der dargestellten singulären Einheiten in der Stellung bei ordnungsgemäßer Spannungsversorgung und in der Stellung Fahrt dargestellt. Die beiden Funktionen der beiden Steuerventile 14 gemäß Fig. 4 sind hier in einem gemeinsamen Steuerventil 51 zusammengefaßt, welches im Verzweigungspunkt 4 der beiden Leitungszweige 5 und 7 angeordnet ist. Das Steuerventil 51 weist ebenfalls eine Feder 18 auf. Es besitzt lediglich die beiden dargestellten Stellungen, bei denen sich jeweils die Absperrung des jeweils anderen Leitungszweiges 5 bzw. 7 ergibt. Das Steuerventil 51 ist von der elektronischen Steuereinrichtung 12 über die Leitung 17 elektrisch ansteuerbar. Die andere Stellung wird in der nicht erregten Stellung durch die Kraft der Feder 18 herbeigeführt. Das Niveauregelventil 9 mit dem integrierten Wegsensor 10 ist auch hier im Leitungszweig 5 angeordnet. Die Schaltventilanordnung 19 besteht hier in Übereinstimmung mit der Ausführungsform der Fig. 3 aus den Schaltventilen 32 und 33. An der Verzweigungsstelle 6 ist wiederum ein Zweiwegeventil 30 angeordnet. Ein Drucksensor 52, der auch als Druckschalter ausgebildet sein kann, ermittelt den Druck in den Luftfederbälgen 2 und gibt über eine elektrische Leitung 53 entsprechende Signale an die ABS/EBS-Anlage 36 sowie an die elektronische Steuereinrichtung 12 ab. Damit wird der letztendlich in den Luftfederbälgen 2 ausgesteuerte Druck überwacht und ggf. nachgeregelt.

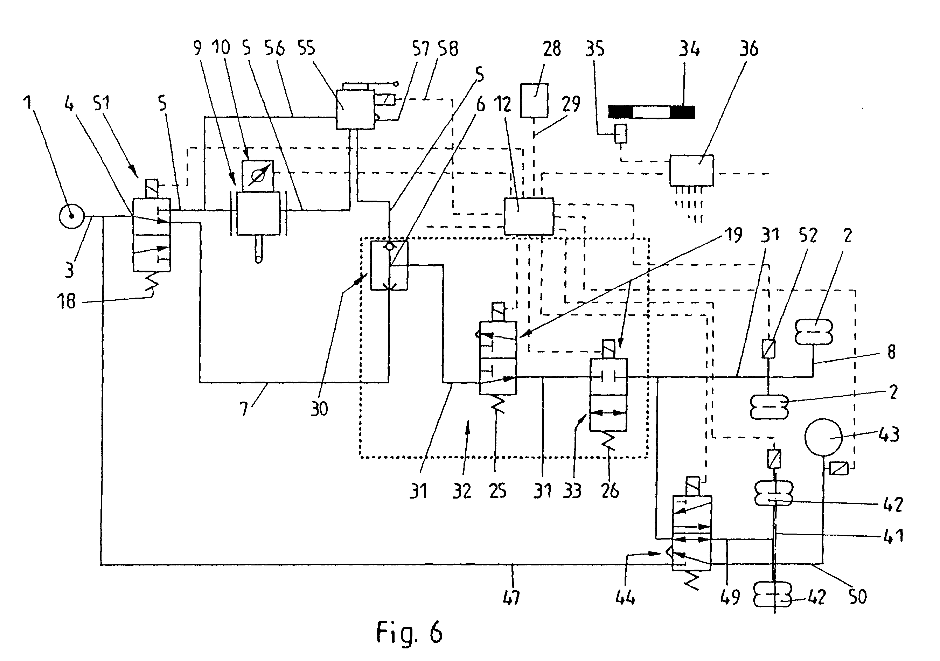

Die in Fig. 6 dargestellte Ausführungsform der Steueranlage baut einerseits auf der Anlage gemäß Fig. 4 und andererseits auf der Anlage gemäß Fig. 5 auf. In Übereinstimmung mit der Anlage gemäß Fig. 5 ist das Steuerventil 51 in die Verzweigungsstelle 4 für die beiden Leitungszweige 5 und 7 eingeschaltet. Andererseits ist die Anlage für ein Fahrzeug mit einer Liftachse 41 ausgebildet und besitzt ähnlich wie die Anlage gemäß Fig. 4 ein Achsliftventil 44. Zusätzlich ist in den parallelen Leitungszweig 5 stromab des Niveauregelventils 9 ein manuell betätigbares Steuerventil 55 eingeschaltet. Dieses Steuerventil 55 dient dem manuellen Heben und Senken des Fahrzeugaufbaus in der Rückfallebene, also bei Ausfall oder Unterbrechung der elektrischen Spannungsversorgung. Das Steuerventil 55 wird über eine Leitung 56 mit Druckluft versorgt. Es besitzt eine eigene Entlüftung 57 zum Senken des Fahrzeugaufbaus. Das Steuerventil 55 ist zusätzlich über die elektronische Steuereinrichtung 12 und eine Leitung 58 in die Stellung Fahrt umschaltbar, wenn diese Rückstellung nach erneuter ordnungsgemäßer Spannungsversorgung und Beginn einer Fahrt vergessen worden ist.

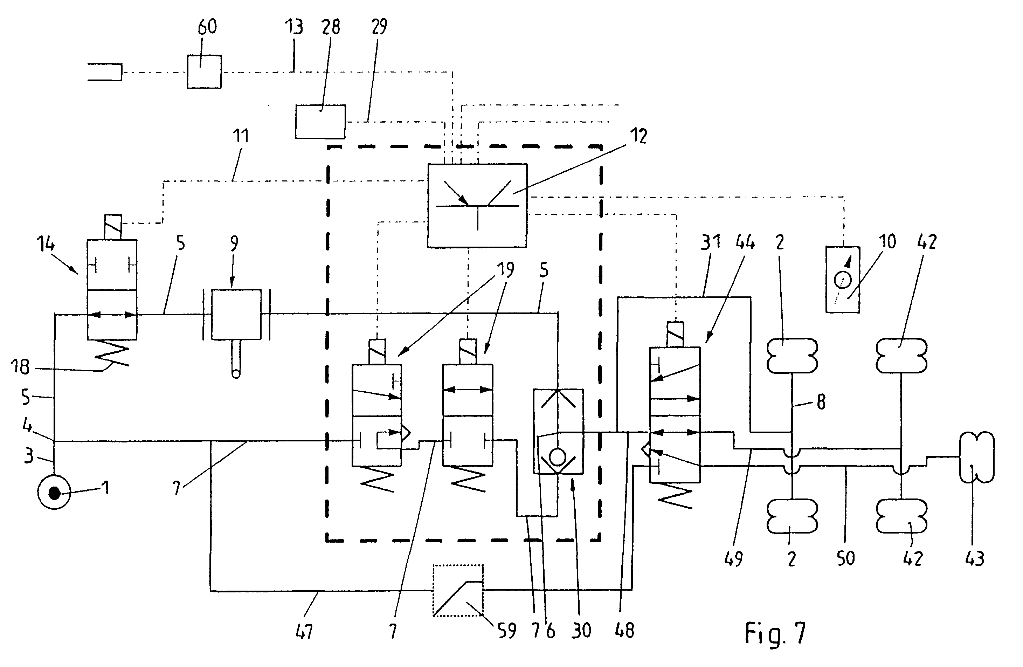

Die Ausführungsform der Steueranlage gemäß Fig. 7 baut auf vorangehenden Ausführungsformen auf. Die Schaltventilanordnung 19 ist hier wiederum in dem parallelen Leitungszweig 7 angeordnet. Das Niveauregelventil 9 und das Sperrventil 14 befinden sich in dem Leitungszweig 5. Die Anlage ist mit einem Achsliftventil 44 versehen, welches zur Aussteuerung der Luftfederbälge 42 und des Hebebalges 43 dient. Das Achsliftventil 44 wird über die Leitung 47 mit Druckluft versorgt. In dieser Leitung 47 ist ein Druckbegrenzungsventil 59 angeordnet, um die in dem Hebebalg 43 entstehenden Kräfte zu begrenzen. In der elektrischen Leitung 13, über die die elektronische Steuereinrichtung 12 mit Spannung versorgt wird, ist ein willkürlich betätigbarer Schalter 60 angeordnet, um den Zustand der fehlenden Spannungsversorgung der elektronischen Steuereinrichtung 12 willkürlich herbeiführen zu können.

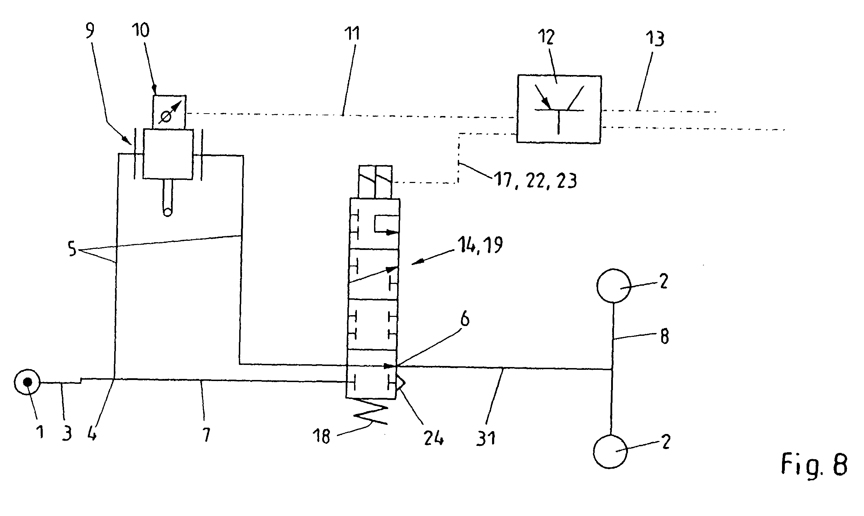

Fig. 8 zeigt schließlich eine besonders einfach und damit vorteilhaft aufgebaute Ausführungsform der Steueranlage. Auch hier sind die beiden parallelen Leitungszweige 5 und 7 verwirklicht. Im Leitungszweig 5 ist das Niveauregelventil 9 angeordnet, welches mit dem integrierten Wegsensor 10 versehen ist. In der Verzweigungsstelle 6, die den Luftfederbälgen 2 zugekehrt ist, an der die beiden Leitungszweige 5 und 7 zusammengeführt werden, ist hier einerseits das Sperrventil 14 und andererseits die Schaltventilanordnung 19 - beides in einem 4/4-Wegeventil vereinigt - angeordnet. Auch diese Ventileinheit ist einerseits von der elektronischen Steuereinrichtung 12 elektrisch ansteuerbar und andererseits über eine Feder 18 in die dargestellte stromlose Stellung überführbar, in der das Niveauregelventil 9 seine ordnungsgemäße Funktion erfüllt. Fig. 8 läßt auch erkennen, daß das Sperrventil 51 der Fig. 5 an der Verzweigungsstelle 6 angeordnet sein kann. Umgekehrt kann das gemeinsame Ventil der Fig. 8 in entsprechender Ausbildung auch an der Verzweigungsstelle 4 vorgesehen sein.

### BEZUGSZEICHENLISTE

- 1 -: Druckluftquelle
- 2 -: Luftfederbalg
- 3 -: Leitung
- 4 -: Verzweigungsstelle
- 5 -: Leitungszweig
- 6 -: Verzweigungsstelle
- 7 -: Leitungszweig
- 8 -: Leitung
- 9 -: Niveauregelventil
- 10 -: Wegsensor

- 21 -: Schaltventil
- 22 -: elektrische Leitung
- 23 -: elektrische Leitung
- 24 -: Entlüftung
- 25 -: Feder
- 26 -: Feder
- 27 -: Schaltventil
- 28 -: Wahlschalter
- 29 -: elektrische Leitung
- 30 -: Zweiwegeventil

- 41 -: Liftachse
- 42 -: Luftfederbälge
- 43 -: Hebebalg
- 44 -: Achsliftventil
- 45 -: elektrische Leitung
- 46 -: Feder
- 47 -: Leitung
- 48 -: Leitung
- 49 -: Leitung
- 50 -: Leitung

- 11 -: elektrische Leitung
- 12 -: elektron. Steuereinrichtung
- 13 -: elektrische Leitung
- 14 -: Sperrventil
- 15 -: Durchgangsstellung
- 16 -: Sperrstellung
- 17 -: elektrische Leitung
- 18 -: Feder
- 19 -: Schaltventilanordnung
- 20 -: Schaltventil

- 31 -: Leitung
- 32 -: Schaltventil
- 33 -: Schaltventil
- 34 -: Polrad
- 35 -: Drehzahlfühler
- 36 -: ABS/EBS-Anlage
- 37 -: elektrische Leitung
- 38 -: Schaltventil
- 39 -: Schaltventil
- 40 -: Baueinheit

- 51 -: Steuerventil
- 52 -: Drucksensor
- 53 -: elektrische Leitung
- 54 -: elektrische Leitung
- 55 -: manuelles Steuerventil
- 56 -: Leitung
- 57 -: Entlüftung
- 58 -: elektrische Leitung
- 59 -: Druckbegrenzungsventil
- 60 -: Schalter

## Patentansprüche

1. Steueranlage zum Heben und Senken des Fahrzeugaufbaus von luftgefederten Fahrzeugen mit Niveauregelung, mit einer Druckluftquelle (1), mindestens einem Niveauregelventil (9), mindestens einer Fahrzeugachse zugeordneten Luftfederbälgen (2), die zur Einregelung eines Sollabstandes zwischen Fahrzeugaufbau und Fahrzeugachse durch das zugeordnete Niveauregelventil (9) mit der Druckluftquelle (1) oder einem drucklosen Auslaß verbindbar sind, einem den Abstand zwischen Fahrzeugaufbau und Fahrzeugachse erfassenden und ein entsprechendes elektrisches Signal abgebenden Wegsensor (10), einer Schaltventilanordnung (19) mit den Stellungen Heben, Senken, Fahrt und Stop, und einer elektronischen Steuereinrichtung (12) zur Steuerung der Schaltventilanordnung (19) entsprechend dem von dem Wegsensor (10) abgegebenen elektrischen Signal, **dadurch gekennzeichnet, daß** zwischen der Druckluftquelle (1) und den Luftfederbälgen (2) zwei parallele Leitungszweige (5 und 7) vorgesehen sind, **daß** das Niveauregelventil (9) in einem der beiden Leitungszweige (5) angeordnet ist und **daß** in einem oder in beiden parallelen Leitungszweigen (5 und 7) je ein Sperrventil (14, 51) angeordnet ist, das einerseits elektrisch und andererseits über eine Feder (18) in zwei Stellungen schaltbar ist, wobei in der durch die Feder (18) eingeschalteten Stellung der das Niveauregelventil (9) aufweisende Leitungszweig (5) und in der elektrisch eingeschalteten Stellung der andere Leitungszweig (7) freigeschaltet wird.

2. Steueranlage nach Anspruch 1, **dadurch gekennzeichnet, daß** das Sperrventil (14) in dem Leitungszweig (5) vor oder nach dem Niveauregelventil (9) angeordnet ist und eine durch die Feder (18) einstellbare Durchgangsstellung (15) sowie eine elektrisch einstellbare Sperrstellung (16) aufweist.

3. Steueranlage nach Anspruch 1, **dadurch gekennzeichnet, daß** das Sperrventil (14) in dem das Niveauregelventil (9) nicht-aufweisenden Leitungszweig (7) angeordnet ist und eine durch die Feder (18) einstellbare Sperrstellung (16) sowie eine elektrisch einstellbare Durchgangsstellung (15) aufweist.

4. Steueranlage nach Anspruch 1, **dadurch gekennzeichnet, daß** in beiden Leitungszweigen (5 und 7) je ein Sperrventil (14) angeordnet ist, die beide je eine Sperrstellung und eine Durchgangsstellung aufweisen, wobei die Durchgangsstellung des Sperrventils in dem das Niveauregelventil (9) aufweisenden Leitungszweig (5) durch die Feder (18) und die Durchgangsstellung des anderen Sperrventils (14) elektrisch über die elektronische Steuereinrichtung (12) einstellbar ist.

5. Steueranlage nach Anspruch 1, **dadurch gekennzeichnet, daß** an der von der Druckluftquelle (1) ausgehenden Verzweigungsstelle (4) der beiden Leitungszweige (5 und 7) ein gemeinsames Sperrventil (51) vorgesehen ist, welches in der durch die Feder (18) einschaltbaren Stellung die Druckluftquelle (1) mit dem das Niveauregelventil (9) enthaltenden Leitungszweig (5) verbindet und den anderen Leitungszweig (7) absperrt, während es in der durch die elektrische Steuereinrichtung (12) einschaltbaren Stellung die Druckluftquelle (1) mit dem das Niveauregelventil (9) nicht-enthaltenden Leitungszweig (7) verbindet und den das Niveauregelventil (9) enthaltenden Leitungszweig (5) absperrt.

6. Steueranlage nach Anspruch 1, **dadurch gekennzeichnet, daß** an der den Luftfederbälgen (2) zugekehrten Verzweigungsstelle (6) der beiden Leitungszweige (5 und 7) ein gemeinsames Sperrventil (51; 14) vorgesehen ist, welches in der durch die Feder (18) einschaltbaren Stellung den das Niveauregelventil (9) enthaltenden Leitungszweig (5) mit den Luftfederbälgen (2) verbindet und den anderen Leitungszweig (7) absperrt, während es in der durch die elektrische Steuereinrichtung (12) einschaltbaren Stellung den das Niveauregelventil (9) nicht-enthaltenden Leitungszweig (7) mit den Luftfederbälgen (2) verbindet und den anderen Leitungszweig (5) absperrt.

7. Steueranlage nach einem der Ansprüche 1 bis 6, **dadurch gekennzeichnet, daß** die Schaltventilanordnung (19) zwei in Reihe angeordnete Schaltventile (20, 21; 32, 33) aufweist, die beide elektrisch sowie je durch eine Feder (25 bzw. 26) schaltbar sind.

8. Steueranlage nach einem der Ansprüche 1 bis 6, **dadurch gekennzeichnet, daß** die Schaltventilanordnung (19) ein Schaltventil (27) mit mindestens drei Stellungen Senken, Heben und Stop = Fahrt aufweist, das elektrisch sowie über eine Feder (25) schaltbar ist.

9. Steueranlage nach Anspruch 8, **dadurch gekennzeichnet, daß** das Schaltventil (27) und das Sperrventil (14) baulich vereinigt sind.

10. Steueranlage nach einem der Ansprüche 1 bis 9, **dadurch gekennzeichnet, daß** die Schaltventilanordnung (19) in dem das Niveauregelventil (9) nicht-enthaltenden Leitungszweig (7) angeordnet ist.

11. Steueranlage nach einem der Ansprüche 1 bis 9, **dadurch gekennzeichnet, daß** die beiden parallelen Leitungszweige (5 und 7) über ein Zweiwegeventil (30) zusammengeführt sind und die Schaltventilanordnung (19) in einer gemeinsamen, zu den Luftfederbälgen (2) führenden Leitung (31) angeordnet ist.

12. Steueranlage nach einem der Ansprüche 1 bis 11, **dadurch gekennzeichnet, daß** die elektronische Steuereinrichtung (12) zur Verarbeitung eines den Fahrzustand wiedergebenden elektrischen Signals ausgebildet ist.

13. Steueranlage nach Anspruch 1, **dadurch gekennzeichnet, daß** das Niveauregelventil (9) und der Wegsensor (10) baulich vereinigt sind.

14. Steueranlage nach Anspruch 1, **dadurch gekennzeichnet, daß** die elektrische Steuereinrichtung (12) mit einem Wahlschalter (28) und/oder der das Niveauregelventil (9) enthaltende Leitungszweig (5) mit einem manuell betätigbaren Steuerventil (55) zum willkürlichen Heben und Senken des Fahrzeugaufbaus versehen sind.

## Claims

1. Control system for lifting and lowering the body of an air-suspended vehicle including an axle and level control, comprising a source of compressed air (1), at least one level control valve (9), a plurality of air-suspension bellows (2) each being associated with at least one axle and being designed and arranged to connect the bellows with the source of compressed air (1) or with a vented exit to adjust a desired distance between the body and the axle, a path sensor (10) being designed and arranged to sense and determine the distance between the body and the axle and to create and deliver a respective electric signal, a switching valve unit (19) having a lifting position, a lowering position, a driving position and a stop position, and an electronic control unit (12) being designed and arranged to control the switching valve unit (19) in response to the electric signal delivered by the path sensor (10), **wherein** two parallel conduit branches (5 and 7) are located between the source of compressed air (1) and the air-suspension bellows (2), and one locking valve (14, 51) each is located in one or in both of the conduit branches (5 and 7), the locking valve being designed and arranged to be electrically switched on the one hand and by a spring (18) on the other hand to reach two positions, the conduit branch (5) including the level control valve (9) being in the position caused by the spring (18) of the locking valve is activated while the other conduit branch (7) is activated in the electrically switched position.

2. Control system of claim 1, **wherein** the locking valve (14) in the conduit branch (5) is located upstream or downstream of the level control valve (9) and has a passage position (15) being adjustable by the spring (18) and an electrically switchable locking position.

3. Control system of claim 1, **wherein** the locking valve (14) is located in the conduit branch (7) not including the level control valve (9) and being designed and arranged to have a locking position (16) causable by the spring (18) and an electrically switchable passage position (15).

4. Control system of claim 1, **wherein** a locking valve (14) each is arranged in both of the conduit branches (5 and 7), the locking valves having a locking position and a passage position each, the passage position of the locking valve arranged in the conduit branch (5) including the level control valve (9) being designed to be adjustable by the spring, while the passage position of the other locking valve (14) being designed to be electrically switchable by the electronic control unit (12).

5. Control system of claim 1, **wherein** a common locking valve (51) is arranged at a branch location (4) of the two conduit branches (5 and 7) close to the source of compressed air (1), the locking valve in the position causable by the spring (18) connecting the source of compressed air (1) with the branch conduit (5) including the level control valve (9) and closing the other branch conduit (7), while the locking valve in the electrically switchable position by the electronic control unit (12) connecting the source of compressed air (1) with the branch conduit (7) not including the level control valve (9) and closing the branch conduit (5) including the level control valve (9).

6. Control system of claim 1, **wherein** a common locking valve (51; 14) is arranged at a branch location (6) of the two conduit branches (5 and 7) close to the bellows (2), the locking valve in the position causable by the spring (18) connecting the branch conduit (5) including the level control valve (9) with the bellows (2) and closing the other branch conduit (7), while the locking valve in the electrically switchable position by the electronic control unit (12) connecting the branch conduit (7) not including the level control valve (9) with the bellows (2) and closing the other branch conduit (5).

7. Control system of claim 1, **wherein** the switching valve unit (19) includes two switching valves (20, 21; 32, 33) being arranged in series and each including a spring (25, 26), the two switching valves each being designed and arranged to be switched by the spring and to be electrically switched.

8. Control system of one of the claims 1 to 6, **wherein** the switching valve unit (19) includes a switching valve (27) at least having three positions, namely a first lowering position, a second lifting position and a third driving position and stop position, the switching valve including a spring (25) and being designed and arranged to be switched by the spring (25) and to be electrically switched.

9. Control system of claim 8, **wherein** the switching valve (27) and the locking valve (14) are designed as one structural unit.

10. Control system of one of the claims 1 to 9, **wherein** the switching valve unit (19) is arranged in the conduit branch (7) not including the level control valve (9).

11. Control system of one of the claims 1 to 9, **wherein** a two way valve (30) is designed and arranged to connect the two parallel conduit branches (5 and 7) and the second conduit branch, and the switching valve unit (19) is arranged in a common conduit (31) leading to the air-suspension bellows (2).

12. Control system of one of the claims 1 to 11, **wherein** the electronic control unit (12) is designed and arranged to process an electric signal corresponding to the driving condition of the vehicle.

13. Control system of claim 1, **wherein** the level control valve (9) and the path sensor (10) are designed as one common structural unit.

14. Control system of claim 1, **wherein** the electronic control unit (12) includes a selector switch (28) and/or the conduit branch (5) with the level control valve (9) includes a control valve (55) to be manually actuated, the switch and/or the valve being designed and arranged to arbitrarily lift and lower the body of the vehicle.

## Revendications

1. Système de commande pour relever et abaisser la carrosserie de véhicules à suspension pneumatique et régulation du niveau, comportant une source d'air comprimé (1), au moins une soupape de régulation du niveau (9), au moins des soufflets de suspension pneumatiques (2) associés à un essieu et qui, pour régler une distance de consigne entre la carrosserie du véhicule et l'essieu, peuvent être reliés, par la soupape de régulation du niveau (9) associée, à la source d'air comprimé (1) ou à un échappement sans pression, un capteur de distance (10) détectant la distance entre la carrosserie du véhicule et l'essieu et délivrant un signal électrique correspondant, un ensemble de soupapes de commutation (19) avec les positions levage, abaissement, marche et arrêt, ainsi qu'un dispositif de commande électronique (12) pour la commande de l'ensemble de soupapes de commutation (19) en fonction du signal électrique fourni par le capteur de distance (10), **caractérisé en ce que** deux branches de conduite (5 et 7) parallèles sont prévues entre la source d'air comprimé (1) et les soufflets de suspension pneumatiques (2), **en ce que** la soupape de régulation du niveau (9) est disposée dans l'une des deux branches de conduite (5) et **en ce que** une soupape d'arrêt (14, 51) est disposée dans l'une ou dans les deux branches de conduite (5 et 7) parallèles qui peut être commutée dans deux positions, d'une part électriquement et d'autre part au moyen d'un ressort (18), dans la position enclenchée par le ressort (18), la branche de conduite (5) comportant la soupape de régulation du niveau (9) étant libérée et dans la position enclenchée électriquement, l'autre branche de conduite (7) étant libérée.

2. Système de commande selon la revendication 1, **caractérisé en ce que** la soupape d'arrêt (14) est disposée dans la branche de conduite (5) en amont ou en aval de la soupape de régulation du niveau (9) et présente une position de passage (15) réglable au moyen du ressort (18) ainsi qu'une position d'arrêt (16) réglable électriquement.

3. Système de commande selon la revendication 1, **caractérisé en ce que** la soupape d'arrêt (14) est disposée dans la branche de conduite (7) ne comportant pas la soupape de régulation du niveau (9) et présente une position d'arrêt (16) réglable au moyen du ressort (18) ainsi qu'une position de passage (15) réglable électriquement.

4. Système de commande selon la revendication 1, **caractérisé en ce que** dans chacune des deux branches de conduite (5 et 7) est disposée une soupape d'arrêt (14) qui présente toutes deux une position d'arrêt et une position de passage, la position de passage de la soupape d'arrêt, dans la branche de conduite (5) comportant la soupape de régulation du niveau (9), étant réglable au moyen du ressort (18), et la position de passage de l'autre soupape d'arrêt (14) étant réglable électriquement au moyen du dispositif de commande électronique (12).

5. Système de commande selon la revendication 1, **caractérisé en ce qu'**au point de ramification (4), partant de la source d'air comprimé (1), des deux branches de conduite (5 et 7), est prévue une soupape d'arrêt (51) commune qui, dans la position pouvant être enclenchée au moyen du ressort (18), relie la source d'air comprimé (1) à la branche de conduite (5) contenant la soupape de régulation du niveau (9) et ferme l'autre branche de conduite (7), tandis que dans la position pouvant être enclenchée par le dispositif de commande électrique (12), elle relie la source d'air comprimé (1) à la branche de conduite (7) ne contenant pas la soupape de régulation du niveau (9) et ferme la branche de conduite (5) contenant la soupape de régulation du niveau (9).

6. Système de commande selon la revendication 1, **caractérisé en ce qu'**au point de ramification (6), tourné vers les soufflets de suspension pneumatique (2), des deux branches de conduite (5 et 7), est prévue une soupape d'arrêt (51 ; 14) commune qui, dans la position pouvant être enclenchée au moyen du ressort (18), relie la branche de conduite (5) contenant la soupape de régulation du niveau (9) aux soufflets de suspension pneumatique (2) et ferme l'autre branche de conduite (7), tandis que dans la position pouvant être enclenchée au moyen du dispositif de commande électrique (12), elle relie la branche de conduite (7) ne contenant pas la soupape de régulation du niveau (9) aux soufflets de suspension pneumatique (2) et ferme l'autre branche de conduite (5).

7. Système de commande selon l'une des revendications 1 à 6, **caractérisé en ce que** l'ensemble de soupapes de commutation (19) comporte deux soupapes de commutation (20, 21 ; 32, 33) disposées en série qui peuvent être commandées toutes deux électriquement, ainsi que chacune par un ressort (25 ou 26).

8. Système de commande selon l'une des revendications 1 à 6, **caractérisé en ce que** l'ensemble de soupapes de commutation (19) comporte une soupape de commande (27) avec au moins trois positions : abaissement, relevage et arrêt = marche, qui peut être commandée aussi bien électriquement qu'au moyen d'un ressort (25).

9. Système de commande selon la revendication 8, **caractérisé en ce que** la soupape de commutation (27) et la soupape d'arrêt (14) sont réunies de par leur construction.

10. Système de commande selon l'une des revendications 1 à 9, **caractérisé en ce que** l'ensemble de soupapes de commutation (19) est disposé dans la branche de conduite (7) ne contenant pas la soupape de régulation de niveau (9).

11. Système de commande selon l'une des revendications 1 à 9, **caractérisé en ce que** les deux branches de conduite (5 et 7) parallèles sont réunies par une soupape à deux voies (30) et l'ensemble de soupapes de commutation (19) est disposé dans une conduite (31) commune menant aux soufflets de suspension pneumatique (2).

12. Système de commande selon l'une des revendications 1 à 11, **caractérisé en ce que** le dispositif de commande électronique (12) est conçu pour traiter un signal électrique traduisant l'état de marche.

13. Système de commande selon la revendication 1, **caractérisé en ce que** la soupape de régulation du niveau (9) et le capteur de distance (10) sont réunis de par leur construction.

14. Système de commande selon la revendication 1, **caractérisé en ce que** le dispositif de commande électrique (12) est pourvu d'un sélecteur (28) et/ou la branche de conduite (5) contenant la soupape de régulation du niveau (9) est pourvue d'une soupape de commande (55) pouvant être actionnée manuellement pour relever et abaisser volontairement la carrosserie du véhicule.
